# EUROPÄISCHE PATENTSCHRIFT

(11) **EP 1 612 993 B1**
(45) Veröffentlichungstag und Bekanntmachung des Hinweises auf die Patenterteilung: **10.10.2007**
(21) Anmeldenummer: 04015265.4
(22) Anmeldetag: 29.06.2004
(51) Int. Cl.: H04L 12/24

(54) **Verfahren und Einrichtung zum Wechsel des Betriebsmodus eines Agenten eines Managementnetzes**
Method and arrangement for changing the operation mode of an agent of a management network
Méthode et dispositif pour changer le mode d'opération d'un agent d'un réseau de gestion

(43) Veröffentlichungstag der Anmeldung: 04.01.2006
(73) Patentinhaber: SIEMENS AKTIENGESELLSCHAFT, 80333 München (DE)
(72) Erfinder: Hirsch, Lucian, 81373 München (DE)

(56) Entgegenhaltungen:
- EP-A- 1 241 828
- MAZUMDAR S ET AL: "DESIGN OF PROTOCOL INDEPENDENT MANAGEMENT AGENT TO SUPPORT SNMP AND CMIP QUERIES" INTEGRATED NETWORK MANAGEMENT, III PROCEEDINGS 3RD INTERNATIONAL SYMPOSIUM, 18-23 APRIL 1993, AMSTERDAM, NL, Bd. C12, 1993, Seiten 377-388, XP000749257
- MIYAGISHI O ET AL: "NTT'S APPROACH TO OPEN TELECOMMUNICATIONS MANAGEMENT PART 2: CURRENT ACTIVITIES AND FUTURE PLANS" NTT REVIEW, TELECOMMUNICATIONS ASSOCIATION, TOKYO, JP, Bd. 6, Nr. 3, 1. Mai 1994 (1994-05-01), Seiten 88-94, XP000467004 ISSN: 0915-2334

## Beschreibung

Die Erfindung betrifft ein Verfahren zum Betreiben eines Managementnetzes mit einem Agenten, sowie einem ersten und einem zweiten Manager, wobei zwischen dem Agenten und dem ersten Manager eine Kommunikation über eine erste Schnittstelle und zwischen dem Agenten und dem zweiten Manager eine Kommunikation über eine zweite Schnittstelle erfolgt. Weiterhin betrifft die Erfindung einen Agenten und einen Manager zum Durchführen des Verfahrens.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Einrichtungen bzw. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystem (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 812.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Das Dokument
Mazumdar et al: "Design of protocol independent management agent to support SNMP and CMIP queries", Integrated Network Management, III Proceedings 3rd International Symposium, 18-23 April 1993, Amsterdam, NL, Bd. C12, 1993, S. 377-388, XP000749257
beschreibt einen Agenten, der sowohl CMIP als auch SNMP unterstützt. Der Agent kann mit SNMP und CMIP Anwendungen kommunizieren. Er verfügt über eine MIB (Management Information Base), welche protokollunabhängig ist. Auf diese MIB können sowohl der CMIP als auch der SNMP Protokoll Prozessor des Agenten zugreifen.

Das Dokument
Miyagishi et al: "NTT's approach to open telecommunications management part 2: current activities and future plans", NTT Review, Telecommunications Association, Tokyo, JP, Bd. 6, Nr. 3, 1. Mai 1994, S. 88-94, XP000467004 ISSN: 0915-2334
beschreibt einen Proxy, welcher sich zwischen einem Manager und einem Agenten befindet. Der Proxy kommuniziert mit dem Manager unter Verwendung von CMIP, führt eine Umwandlung zwischen CMIP-Nachrichten und SNMP-Nachrichten durch, und kommuniziert mit dem Agenten unter Verwendung von SNMP.

Der Erfindung liegt die Aufgabe zugrunde, ein effizientes Verfahren zum Betreiben eines Managementnetzes aufzuzeigen, in welchem mehrere Schnittstellen zwischen einem Agenten und Managern vorhanden sind. Weiterhin sollen ein geeigneter Manager und ein ebensolcher Agent zur Durchführung des Verfahrens vorgestellt werden.

Diese Aufgabe wird durch ein Verfahren mit den Merkmalen des Patentanspruchs 1, sowie durch einen Manager und einen Agenten mit Merkmalen von nebengeordneten Ansprüchen gelöst.

Vorteilhafte Ausgestaltungen und Weiterbildungen sind Gegenstand von Unteransprüchen.

Bei dem erfindungsgemäßen Verfahren zum Betreiben eines Managementnetzes eines Telekommunikationsnetzes mit einem Agenten, sowie einem ersten und einem zweiten Manager erfolgt eine Kommunikation zwischen dem Agenten und dem ersten Manager über eine erste Schnittstelle und zwischen dem Agenten und dem zweiten Manager über eine zweite Schnittstelle. Erfindungsgemäß wird für die Kommunikation über die erste Schnittstelle ein erstes Objektmodell und für die Kommunikation über die zweite Schnittstelle ein zweites Objektmodell zur Modellierung von Ressourcen des Telekommunikationsnetzes verwendet.

Über Schnittstellen kommuniziert der Agent mit Managern, wobei die jeweilige Schnittstelle unter anderem durch ein Objektmodell gekennzeichnet ist. Mit Hilfe eines Objektmodells werden Netzressourcen des Telekommunikationsnetzes modelliert. Die Ressourcen werden gemäß dem Objektmodell in Objektklassen eingeteilt, wobei jede Objektklasse verschiedene Attribute aufweisen kann. Objektklassen können z.B. aufgeteilt werden in logische bzw. funktionale und hardwarebezogene, meist herstellerabhängige, Objektklassen. Der Agent ist erfindungsgemäß in der Lage, mit Managern unter Verwendung von verschiedenen Objektmodellen zu kommunizieren. Diese Kommunikationen können sowohl gleichzeitig als auch nacheinander stattfinden. Bei dem Agenten kann es sich zum Beispiel um ein Netzwerkelement, bei dem ersten Manager um ein Netzwerkmanagementzentrum, und bei dem zweiten Manager um einen Netzwerkelementmanager eines Mobilfunkkommunikationssystems handeln. Neben dem Agenten und dem ersten und dem zweiten Manager können weitere Einrichtungen Bestandteil des Managementnetzes sein. Das erfindungsgemäße Verfahren kann auf eine Vielzahl von verschiedenen Schnittstellen zwischen einem Agenten und Managern angewandt werden.

Einer vorteilhaften Weiterbildung der Erfindung gemäß erfolgt eine Umschaltung von einer Kommunikation zwischen dem Agenten und dem ersten Manager unter Verwendung des ersten Objektmodells zu einer Kommunikation zwischen dem Agenten und dem zweiten Manager unter Verwendung des zweiten Objektmodells und oder umgekehrt. Dies bedeutet, dass der Agent mit dem ersten und dem zweiten Manager nicht gleichzeitig, sondern nacheinander kommuniziert. Die Umschaltung erfolgt vorzugsweise bei laufendem Betrieb des Agenten, d.h. insbesondere, dass der Agent bei der Umschaltung nicht abgeschaltet werden muss. Während einer Abschaltung könnte der Agent seine Funktion als Agent nicht wahrnehmen.

In Weiterbildung der Erfindung sendet der Manager, welcher aktuell mit dem Agenten kommuniziert, an den Agenten eine Aufforderung zum Wechsel der Kommunikation auf den anderen Manager, woraufhin die Umschaltung erfolgt. Insbesondere kann diese Aufforderung aus einer Aufforderung bestehen, die bestehende Verbindung zum Manager abzubauen und eine neue Verbindung zum anderen Manager aufzubauen. Vorteilhafterweise enthält die Aufforderung Identifikationsinformationen des Managers, zu welchem die Umschaltung erfolgen soll.

Vorteilhaft ist es, wenn der Agent auf Aufforderung den Manager, mit welchem er kommuniziert, wechselt und somit die Umschaltung erfolgt. Die Aufforderung empfängt der Agent vorzugsweise von demjenigen Manager, mit welchem er aktuell kommuniziert. Der Agent kann die Umschaltung dadurch bewirken, dass er die Verbindung zu dem Manager, mit welchem er aktuell kommuniziert, beendet und eine Verbindung zu dem jeweils anderen Manager selbsttätig, d.h. ohne Aufforderung durch den neuen Manager, aufbaut.

Einer Ausgestaltung der Erfindung gemäß empfängt der zweite Manager bei einer Kommunikation zwischen dem Agenten und dem zweiten Manager von dem Agenten unter Verwendung des zweiten Objektmodells Nachrichten und leitet diese unter Verwendung des ersten Objektmodells an den ersten Manager weiter. In diesem Fall gehören der erste und der zweite Manager unterschiedlichen Managementebenen an und stehen untereinander in einem Manager-Agenten-Verhältnis.

Vorteilhaft ist es, wenn der Agent von ihm empfangene oder erzeugte Nachrichten des ersten Objektmodells in Nachrichten des zweiten Objektmodells umwandelt und/oder umgekehrt. Dies ist insbesondere dann günstig, wenn der Agent alle Nachrichten für den ersten und den zweiten Manager ausschließlich unter Verwendung eines der Objektmodelle erzeugen kann und/oder alle Nachrichten von dem ersten und dem zweiten Manager ausschließlich unter Verwendung eines der Objektmodelle verarbeiten kann.

Der erfindungsgemäße Manager für ein mindestens einen weiteren Manager und einen Agenten umfassendes Managementnetz eines Telekommunikationsnetzes weist Mittel zur Kommunikation mit dem Agenten unter Verwendung eines ersten Objektmodells zur Modellierung von Ressourcen des Telekommunikationsnetzes auf. Weiterhin weist er Mittel zum Versenden einer Aufforderung an den Agenten zum Beenden einer Kommunikation unter Verwendung des ersten Objektmodells zwischen dem Manager und dem Agenten und zum Beginnen einer Kommunikation unter Verwendung eines zweiten Objektmodells zwischen dem weiteren Manager und dem Agenten auf.

Der erfindungsgemäße Agent für ein mindestens einen ersten Manager und einen zweiten Manager umfassendes Managementnetz eines Telekommunikationsnetzes weist Mittel zur Kommunikation mit dem ersten Manager unter Verwendung eines ersten Objektmodells zur Modulierung von Ressourcen des Netzwerkmanagement auf. Erfindungsgemäß weist der Agent weiterhin Mittel zur Kommunikation mit dem zweiten Manager unter Verwendung eines zweiten Objektmodells zur Modellierung von Ressourcen des Telekommunikationsnetzes auf.

In Weiterbildung der Erfindung weist der Agent weiterhin Mittel zum Wechseln des Managers, mit welchen er aktuell kommuniziert, von dem ersten Manager zu dem zweiten Manager und/oder umgekehrt, und zum entsprechenden Wechsel des zur Kommunikation verwendeten Objektmodells auf.

Vorteilhaft ist es, wenn der Agent weiterhin Mittel zum Umwandeln von empfangenen oder selber erzeugten Nachrichten des ersten Objektmodells in Nachrichten des zweiten Objektmodells und/oder umgekehrt aufweist.

Mit Vorzug weist der Agent weiterhin Mittel zum Empfangen einer Aufforderung von dem ersten Manager zum Beenden einer Kommunikation unter Verwendung des ersten Objektmodells zwischen dem ersten Manager und dem Agenten und zum Beginn einer Kommunikation unter Verwendung des zweiten Objektmodells zwischen dem zweiten Manager und dem Agenten und/oder einer Aufforderung von dem zweiten Manager zum Beenden einer Kommunikation unter Verwendung des zweiten Objektmodells zwischen dem zweiten Manager und dem Agenten und zum Beginn einer Kommunikation unter Verwendung des ersten Objektmodells zwischen dem ersten Manager und dem Agenten auf.

Sowohl der erfindungsgemäße Manager als auch der erfindungsgemäße Agent eignen sich insbesondere zur Durchführung des erfindungsgemäßen Verfahrens, wobei dies auch auf die Ausgestaltung und Weiterbildung zutrifft. Hierzu können sie weitere geeignete Mittel aufweisen.

Im folgenden wird die Erfindung anhand eines Ausführungsbeispiels näher erläutert. Dabei zeigen:

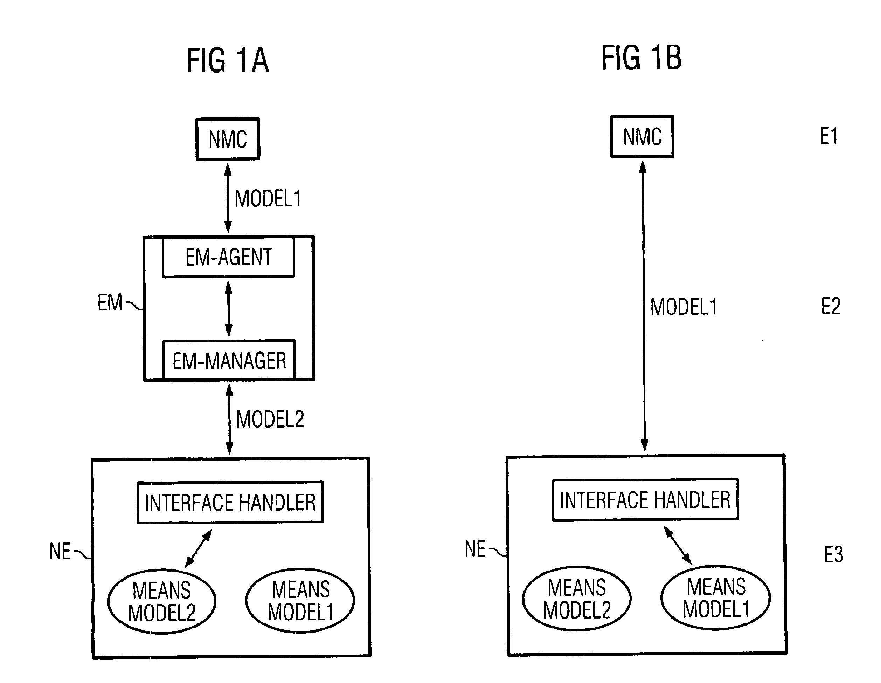

- Figur 1a:: eine erste Konfiguration eines Managementnetzes,
- Figur 1b:: eine zweite Konfiguration eines Managementnetzes.

Es wird in den Figuren 1a und 1b ein Managementnetz eines Telekommunikationsnetzes betrachtet, welches drei Hierarchieebenen E1, E2 und E3 aufweist. Der obersten Ebene E1 gehört das Netzwerkmanagementzentrum NMC an, welches als Manager gegenüber den Einrichtungen des Netzwerkmanagements der niedrigeren Hierarchieebenen E2 und E3 fungiert. Der mittleren Ebene E2 gehört ein Netzwerkelementmanager EM an, bei dem es sich z.B. um ein OMC eines Mobilfunkkommunikationssystems handeln kann. Der untersten Hierarchieebene E3 gehört ein Netzwerkelement NE an, bei dem es sich z.B. um eine Basisstation eines Mobilfunkkommunikationssystems handeln kann.

Gemäß Figur 1a ist es möglich, dass das Netzwerkelement NE mit dem Netzwerkelementmanager EM kommuniziert, während der Netzwerkelementmanager EM mit dem Netzwerkmanagementzentrum NMC kommuniziert. Auf diese Weise können z.B. Fehlermeldungen des Netzwerkelements NE von dem Netzwerkelementmanager EM an das Netzwerkmanagementzentrum NMC weitergleitet werden. Der Netzwerkelementmanager EM fungiert somit gegenüber dem Netzwerkelement NE als Manager, durch einen ersten Teil EM-MANAGER des Netzwerkelementmanagers EM symbolisiert, und gegenüber dem Netzwerkmanagementzentrum NMC als Agent, durch einen zweiten Teil EM-AGENT des Netzwerkelementmanagers EM symbolisiert. Gemäß Figur 1b ist es jedoch auch möglich, dass das Netzwerkelement NE direkt mit dem Netzwerkmanagementzentrum NMC kommuniziert und diesem z.B. Fehlermeldungen sendet. Das Netzwerkelement NE kann somit sowohl von dem Netzwerkmanagementzentrum NMC als auch von dem Netzwerkelementmanager EM gemanagt werden.

Die Schnittstellen zwischen dem Netzwerkmanagementzentrum NMC und dem Netzwerkelementmanager EM, sowie zwischen dem Netzwerkmanagementzentrum NMC und dem Netzwerkelement NE, und zwischen dem Netzwerkelementmanager EM und dem Netzwerkelement NE sind durch die Verwendung von jeweils einem Objektmodell gekennzeichnet. Objektmodelle werden im Managementnetzen verwendet, um Ressourcen des Telekommunikationsnetzes zu beschreiben. Das Netzwerkmanagementzentrum NMC verwendet zur Kommunikation sowohl mit dem Netzwerkelementmanager EM als auch mit dem Netzwerkelement NE ein erstes Objektmodell MODEL1. Somit existiert aus Sicht des Netzwerkmanagementzentrums NMC eine einheitliche Managementschnittstelle unabhängig davon, welche Einrichtung sich am anderen Ende der Schnittstelle befindet. Zwischen dem Netzwerkelementmanager EM und dem Netzwerkelement NE findet die Kommunikation unter Verwendung eines zweiten Objektmodells MODEL2 statt, welches sich vom ersten Objektmodell MODEL1 unterscheidet. Das Netzwerkelement NE weist sowohl Mittel MEANS MODEL2 auf, welche ihm ermöglichen, unter Verwendung des zweiten Objektmodells MODEL2 zu kommunizieren, als auch Mittel MEANS MODEL1, welche ihm ermöglichen, unter Verwendung des ersten Objektmodells MODEL1 zu kommunizieren.

Erfindungsgemäß unterstützt das Netzwerkelement NE zwei unterschiedliche Betriebsmodi. Figur 1a entspricht dem Betrieb des Netzwerkelementes NE im EM-Modus, in welchem das Netzwerkelement NE vom Netzwerkelementmanager EM gemanagt bzw. gesteuert wird, während Figur 1b den Fall darstellt, dass das Netzwerkelement NE im NM-Modus direkt vom Netzwerkmanagementzentrum NMC gemanagt bzw. gesteuert wird. Jeder Betriebsmodus ist somit aus Sicht des Netzwerkelementes NE unmittelbar mit einem Objektmodell MODEL1 oder MODEL2 verknüpft. Es wird im folgenden davon ausgegangen, dass zu jedem Zeitpunkt nur ein Betriebsmodus des Netzwerkelementes NE aktiv ist, so dass zwischen den Betriebsmodi hin- und hergeschaltet wird. Es können jedoch auch Netzwerkelemente NE realisiert werden, welche die beiden beschriebenen Betriebsmodi gleichzeitig verwenden.

Bei der Erstinstallation des Netzwerkelementes NE ist es sinnvoll, dieses defaultmäßig im EM-Modus zu starten, bis die erste Konfiguration mit Hilfe des herstellerspezifischen Netzwerkelementmanagers EM fertiggestellt ist. Das Netzwerkelement NE kommuniziert somit zu Beginn unter Verwendung des zweiten Objektmodells MODEL2. Alarme werden gemäß diesem Objektmodell MODEL2 an den Netzwerkelementmanager EM gesendet, durch welchen eine Umsetzung der Ereignismeldungen des Netzwerkelements NE in das erste Objektmodell MODEL1 erfolgt (sogenanntes Mapping), woraufhin die Ereignismeldung unter Verwendung des ersten Objektmodells MODEL1 an das Netzwerkmanagementzentrums NMC weitergeleitet werden.

Nach dieser Initialisierungsphase kann das Netzwerkelement NE im NM-Betriebsmodus vom Netzwerkmanagementzentrum NMC überwacht werden. Für die Umschaltung in den NM-Betriebsmodus sendet zuerst der Netzwerkelementmanager EM, welcher aktuell das Netzwerkelement NE managt, eine Aufforderung an das Netzwerkelement NE, welche das Netzwerkelement NE veranlasst, die aktuelle Verbindung mit dem Netzwerkelementmanager EM abzubauen. Für den Abbau der Verbindung können an sich bekannte Verfahren eingesetzt werden. Anschließend baut das Netzwerkelement NE aufgrund der Aufforderung durch den Netzwerkelementmanager EM eine neue Verbindung zu dem Netzwerkmanagementzentrum NMC auf. Auch für den Aufbau der Verbindung können an sich bekannte Verfahren eingesetzt werden. Danach reguliert das Netzwerkmanagementzentrum NMC mit Hilfe eines im Netzwerkelement NE vorhandenen Filtermechanismus die sogenannte "event reporting" Funktion des Netzwerkelementes NE. Hierzu können beispielsweise bei einer CMIP basierten Managementschnittstelle sogenannte "M-CREATE" Kommandos zur Erzeugung von sogenannten "Event Forwarding Discriminators" verwendet werden, oder bei einer CORBA basierten Managementschnittstelle sogenannte "subscribe" Kommandos zur Erzeugung von sogenannten "subscription filters". Daraufhin werden vom Netzwerkelement NE generierte Alarme von diesem direkt unter Verwendung des ersten Objektmodells MODEL1 an das Netzwerkmanagementzentrum NMC gesendet. Für eine bestimmte Fehlerursache ist somit aus Sicht des Netzwerkmanagementzentrum NMC der empfangene Alarm für die beiden Konfigurationen gemäß Figur 1a und 1b identisch.

Optimierungen oder Erweiterungen bestehender Kommunikationsnetze erfordern oftmals Änderungen der Netzkonfiguration. Da derartige Umkonfigurierungen üblicherweise auch hersteller-spezifische Parameter betreffen, deren Änderung nur durch den Netzwerkelementmanager EM, z.B. durch ein OMC, durchgeführt werden kann, ist eine Umschaltung des Netzwerkelements NE in den EM-Modus erforderlich. Dabei werden folgende Schritte ausgeführt: zuerst sendet das Netzwerkmanagementzentrum NMC eine Aufforderung an das Netzwerkelement NE zum Abbau der Verbindung zwischen dem Netzwerkmanagementzentrum NMC und dem Netzwerkelement NE. Nach erfolgtem Abbau dieser Verbindung stellt das Netzwerkelement NE aufgrund der vom Netzwerkmanagementzentrum NMC empfangenen Aufforderung eine neue Verbindung zum Netzwerkelementmanager EM her. Der Netzwerkelementmanager EM initiiert im Anschluss mit Hilfe eines im Netzwerkelement NE erzeugten Filtermechanismus die sogenannte "Event Reporting" Funktion und sendet anschließend Konfigurationskommandos an das Netzwerkelement NE. Das Netzwerkelement NE führt die vom Netzwerkelementmanager EM empfangenen Kommandos aus und leitet die Ergebnisse und konfigurationsbezogenen Notifications, wie beispielsweise bei CORBA "objectCreation", "objectDeletion", "attributeValueChange", an den Netzwerkelementmanager EM weiter. Hierzu wird das zweite Objektmodell MODEL2 verwendet. Im Netzwerkelementmanager EM werden die vom Netzwerkelement NE empfangenen Notifications in das erste Objektmodell MODEL1 umgesetzt und an das Netzwerkmanagementzentrum NMC weitergeleitet. Nach Abschluss dieser Konfigurationsphase kann das Netzwerkelement NE wie oben beschrieben wieder in den NM-Modus umgeschaltet werden.

Beide Umschaltvorgänge, d.h. von dem EM- in den NM-Modus und umgekehrt, werden jeweils von dem Manager initiiert, mit welchem das Netzwerkelement NE aktuell verbunden ist, indem dieser eine Aufforderung zur Umschaltung an das Netzwerkelement NE sendet. Die Umschaltung zwischen den Betriebsweisen erfolgt im laufenden Betrieb des Managementnetzes. Für die beschriebenen Umschaltvorgänge ist im Netzwerkelement NE die Einrichtung INTERFACE HANDLER zuständig. Diese empfängt die beschriebenen Aufforderungen zum Wechsel des Betriebsmodus von dem Netzwerkelementmanager EM oder dem Netzwerkmanagementzentrum NMC und verarbeitet diese wie oben näher erläutert, indem sie Verbindungen zu Managern abbricht bzw. herstellt und die Verwendung des jeweils passenden Objektmodells veranlasst. Hierzu kann die Einrichtung INTERFACE HANDLER eine Verbindung sowohl zu den Mitteln MEANS MODEL1 als auch zu den Mitteln MEANS MODEL2 aufweisen bzw. herstellen und somit diese Mittel steuern.

Es ist vorteilhaft, wenn im Netzwerkelement NE eine Einrichtung vorhanden ist, welche eine Abbildung einer Notification eines der Objektmodelle in eine Notification des jeweils anderen Objektmodells durchführt. So ist es z.B. möglich, dass Notifications vom Netzwerkelement NE grundsätzlich gemäß dem Objektmodell MODEL2 der Schnittelle zwischen dem Netzwerkelementmanager EM und dem Netzwerkelement NE generiert werden. Befindet sich das Netzwerkelement NE im NM-Modus, erkennt die Einrichtung INTERFACE HANDLER dies und veranlasst bei Vorliegen einer an das Netzwerkmanagementzentrum NMC zu versendenden Notification, eine Umsetzung dieser Notification in das erste Objektmodell MODEL1 der Schnittstelle zum Netzwerkmanagementzentrums NMC durchzuführen. Weiterhin ist es möglich, dass empfangene Kommandos im Netzwerkelement NE ausschließlich in einer der Objektmodelle MODEL1 oder MODEL2 verarbeitet werden können oder sollen. So kann z.B. ein vom Netzwerkelementmanager EM empfangenes Kommando des zweiten Objektmodells MODEL2 direkt verarbeitet werden, während ein vom Netzwerkmanagementzentrums NMC gemäß dem ersten Objektmodell MODEL1 empfangenes Kommando vor der weiteren Verarbeitung zuerst einer Umwandlung in das zweite Objektmodell MODEL2 unterzogen wird. Eine derartige Einrichtung zur Abbildung bzw. Umsetzung zwischen den beiden Objektmodellen MODEL1 und MODEL2 kann aufgebaut sein wie diejenige Einrichtung, welche das Mapping bzw. die Abbildung im Netzwerkelementmanager EM in der Konfiguration gemäß Figur 1a durchführt.

Die Anwendung des beschriebenen Verfahrens ist insbesondere aus dem Grund von Vorteil, dass die Alarmüberwachung eines Mobilfunkkommunikationssystems aus Kostengründen immer mehr von den Netzwerkelementmanagern auf die Netzwerkmanagementzentren verlagert wird. Insbesondere nachts oder an Wochenenden ist es wünschenswert, die Netzwerkelementmanager nicht mit Personal besetzen zu müssen. Andererseits werden die Netzwerkelementmanager weiterhin zum Management der Netzwerkelemente benötigt, da bestimmte hersteller-spezifische Aktivitäten, wie z.B. hardwarebezogenes Konfigurationsmanagement, nur von dem jeweiligen herstellerspezifischen OMC ausgeführt werden können. Durch das erfindungsgemäße Verfahren lassen sich diese beiden Anforderungen an das Managementnetz vereinbaren. Das erfindungsgemäße Verfahren ist unabhängig von den für die verschiedenen Schnittstellen eingesetzten Kommunikationsprotokollen.

Während das Verfahren anhand zweier Objektmodelle MODEL1 und MODEL2 und entsprechend zweier Modi des Agenten erläutert wurde, ist es auf eine größere Anzahl an verschiedenen Schnittstellen, zwischen welchen umgeschaltet werden soll, anwendbar. Die Aufforderung eines aktuell den Agenten steuernden Managers, welche den Agenten zur Durchführung der Umschaltung veranlasst, sollte in diesem Fall Identifikationsinformationen desjenigen Managers, zu welchem oder zu welchen umgeschaltet werden soll, enthalten.

## Patentansprüche

1. Verfahren zum Betreiben eines Managementnetzes eines Telekommunikationsnetzes mit einem Agenten (NE),sowie einem ersten Manager (NMC) und einem zweiten Manager (EM), wobei eine Kommunikation zwischen dem Agenten (NE) und dem ersten Manager (NMC) über eine erste Schnittstelle und zwischen dem Agenten (NE) und dem zweiten Manager (EM) über eine zweite Schnittstelle erfolgt,
wobei für die Kommunikation über die erste Schnittstelle ein erstes Objektmodell (MODEL1) und für die Kommunikation über die zweite Schnittstelle ein zweites Objektmodell (MODEL2) zur Modellierung von Ressourcen des Telekommunikationsnetzes verwendet wird,
**dadurch gekennzeichnet,**
**dass** bei einer Kommunikation zwischen dem Agenten (NE) und dem zweiten Manager (EM) der zweite Manager (EM) Nachrichten von dem Agenten (NE) unter Verwendung des zweiten Objektmodells (MODEL2) empfängt und zum ersten Manager (NMC) unter Verwendung des ersten Objektmodells (MODEL1) weiterleitet.

2. Verfahren nach Anspruch 1,
**dadurch gekennzeichnet,**
**dass** eine Umschaltung von einer Kommunikation zwischen dem Agenten (NE) und dem ersten Manager (NMC) unter Verwendung des ersten Objektmodells (MODEL1) zu einer Kommunikation zwischen dem Agenten (NE) und dem zweiten Manager (EM) unter Verwendung des zweiten Objektmodells (MODEL2) und/oder umgekehrt erfolgt.

3. Verfahren nach Anspruch 2,
**dadurch gekennzeichnet,**
**dass** die Umschaltung bei laufendem Betrieb des Agenten (NE) erfolgt.

4. Verfahren nach Anspruch 2 oder 3,
**dadurch gekennzeichnet,**
**dass** der Manager (NMC, EM), welcher aktuell mit dem Agenten (NE) kommuniziert, an den Agenten (NE) eine Aufforderung sendet zum Wechsel der Kommunikation auf den anderen Manager (EM, NMC), woraufhin die Umschaltung erfolgt.

5. Verfahren nach einem der Ansprüche 2 bis 4,
**dadurch gekennzeichnet,**
**dass** der Agent (NE) auf Aufforderung den Manager (NMC, EM), mit welchem er kommuniziert, wechselt und somit die Umschaltung erfolgt.

6. Verfahren nach einem der Ansprüche 1 bis 5,
**dadurch gekennzeichnet,**
**dass** der Agent (NE) von ihm empfangene und/oder erzeugte Nachrichten des ersten Objektmodells (MODEL1) in Nachrichten des zweiten Objektmodells (MODEL2) umwandelt und/oder umgekehrt.

7. Managementnetz eines Telekommunikationsnetzes, welches zumindest einen ersten Manager (NMC), mindestens einen zweiten Manager (EM), und einen Agenten (NE) umfasst, mit
Mitteln des ersten Managers (NMC) zur Kommunikation mit dem Agenten (NE) unter Verwendung eines ersten Objektmodells (MODEL1) zur Modellierung von Ressourcen des Telekommunikationsnetzes,
Mitteln des zweiten Managers (EM) zur Kommunikation mit dem Agenten (NE) unter Verwendung eines zweiten Objektmodells (MODEL2) zur Modellierung von Ressourcen des Telekommunikationsnetzes,
Mitteln (MEANS MODEL1) des Agenten (NE) zur Kommunikation mit dem ersten Manager (NMC) unter Verwendung des ersten Objektmodells (MODEL1) und Mitteln (MEANS MODEL2) des Agenten (NE) zur Kommunikation mit dem zweiten Manager (EM) unter Verwendung des zweiten Objektmodells (MODEL2), Mitteln des zweiten Managers (EM) zum Empfangen bei einer Kommunikation zwischen dem Agenten (NE) und dem zweiten Manager (EM) von Nachrichten von dem Agenten (NE) unter Verwendung des zweiten Objektmodells (MODEL2) und zum Weiterleiten an den ersten Manager (NMC) unter Verwendung des ersten Objektmodells (MODEL1),
Mitteln des ersten Managers (NMC) zum Versenden einer Aufforderung an den Agenten (NE) zum Beenden einer Kommunikation unter Verwendung des ersten Objektmodells (MODEL1) zwischen dem Manager (NMC) und dem Agenten (NE) und zum Beginnen einer Kommunikation unter Verwendung des zweiten Objektmodells (MODEL2) zwischen dem zweiten Manager (EM) und dem Agenten (NE),
Mitteln des zweiten Managers (EM) zum Versenden einer Aufforderung an den Agenten (NE) zum Beenden einer Kommunikation unter Verwendung des zweiten Objektmodells (MODEL2) zwischen dem zweiten Manager (EM) und dem Agenten (NE) und zum Beginnen einer Kommunikation unter Verwendung des ersten Objektmodells (MODEL1) zwischen dem ersten Manager (NMC) und dem Agenten (NE).

## Claims

1. Method for operating a management network of a telecommunications network with an agent (NE), as well as a first manager (NMC) and a second manager (EM), with the agent (NE) communicating with the first manager (NMC) via a first interface and the agent (NE) communicating with the second manager (EM) via a second interface,
with a first object model (MODEL1) being used for communication via the first interface and a second object model (MODEL2) for communication via the second interface for modelling resources of the telecommunication network,
**characterised in that**
for communication between the agent (NE) and the second manager (EM) the second Manager (EM) receives messages from the agent (NE) using the second object model (MODEL2) and forwards them to the first manager (NMC) using the first object model (MODEL1).

2. Method according to claim 1,
**characterised in that**
a switchover from communication between the agent (NE) and the first manager (NMC) using the first object model (MODEL1) to communication between the agent (NE) and the second manager (EM) is performed using the second object model (MODEL2) and/or vice versa.

3. Method according to claim 2,
**characterised in that**
the switchover is undertaken during operation of the agent (NE).

4. Method according to claim 2 or 3,
**characterised in that**
the manager (NMC, EM) which is currently communicating with the agent (NE), sends a request to the agent (NE) to switch communication to the other manager (EM, NMC), after which the switch is made.

5. Method according to one of the claims 2 to 4,
**characterised in that**
on request the agent (NE) switches the manager (NMC, EM), with which it is communicating and thus the switchover occurs.

6. Method according to one of the claims 1 to 5,
**characterised in that**
the agent (NE) converts messages of the first object model (MODEL1) received and/or created by it into messages of the second object model (MODEL2) and/or vice versa.

7. Management network of a telecommunications network, which comprises at least one first manager (NMC), at least one second manager (EM), and an agent (NE), with
means of the first manager (NMC) for communication with the agent (NE) using a first object model (MODEL1) for modelling resources of the telecommunications network,
means of the second manager (EM) for communication with the agent (NE) using a second object model (MODEL2) for modelling resources of the telecommunications network,
means (MEANS MODEL1) of the agent (NE) for communication with the first Manager (NMC) using the first object model (MODEL1)
and means (MEANS MODEL2) of the agent (NE) for communication with the second manager (EM) using the second object model (MODEL2),
means of the second manager (EM) for receiving, during communication between the agent (NE) and the second manager (EM), messages from the agent (NE) using the second object model (MODEL2) and for forwarding them to the first manager (NMC) using the first object model (MODEL1),
means of the first manager (NMC) to send a request to the agent (NE) for ending communication using the first object model (MODEL1) between the manager (NMC) and the agent (NE) and for beginning a communication using the second object model (MODEL2) between the second manager (EM) and the agent (NE),
means of the second manager (EM) for sending a request to the agent (NE) to end communication using the second object model (MODEL2) between the second Manager (EM) and the agent (NE) and to begin communication using the first object model (MODEL1) between the first manager (NMC) and the agent (NE).

## Revendications

1. Procédé pour exploiter un réseau de gestion d'un réseau de télécommunications avec un agent (NE), et un premier gestionnaire (NMC) et un second gestionnaire (EM), une communication entre l'agent (NE) et le premier gestionnaire (NMC) s'effectuant par une première interface et entre l'agent (NE) et le second gestionnaire (EM) par une seconde interface,
un premier modèle d'objet (MODEL1) étant utilisé pour la communication par la première interface et un second modèle d'objet (MODEL2) étant utilisé pour la communication par la seconde interface pour la modélisation de ressources du réseau de télécommunications,
**caractérisé en ce que**,
lors d'une communication entre l'agent (NE) et le second gestionnaire (EM), le second gestionnaire (EM) reçoit des messages de l'agent (NE) en utilisant le second modèle d'objet (MODEL2) et les transmet au premier gestionnaire (NMC) en utilisant le premier modèle d'objet (MODEL1).

2. Procédé selon la revendication 1,
**caractérisé en ce que**
une commutation d'une communication entre l'agent (NE) et le premier gestionnaire (NMC) utilisant le premier modèle d'objet (MODEL1), s'effectue vers une communication entre l'agent (NE) et le second gestionnaire (EM) utilisant le second modèle d'objet (MODEL2) et/ou inversement.

3. Procédé selon la revendication 2,
**caractérisé en ce que**
la commutation s'effectue lors du fonctionnement de l'agent (NE).

4. Procédé selon la revendication 2 ou 3,
**caractérisé en ce que**
le gestionnaire (NMC, EM), qui communique actuellement avec l'agent (NE), envoie à l'agent (NE) une demande pour le passage de la communication vers l'autre gestionnaire (EM, NMC), après quoi la commutation est effectuée.

5. Procédé selon l'une quelconque des revendications 2 à 4,
**caractérisé en ce que**
l'agent (NE) change sur demande le gestionnaire (NMC, EM) avec lequel il communique et la commutation est ainsi effectuée.

6. Procédé selon l'une quelconque des revendications 1 à 5,
**caractérisé en ce que**
l'agent (NE) convertit des messages reçus de lui et/ou générés par lui du premier modèle d'objet (MODEL1) en message du second modèle d'objet (MODEL2) et/ou inversement.

7. Réseau de gestion d'un réseau de télécommunications, qui comprend au moins un premier gestionnaire (NMC), au moins un second gestionnaire (EM) et un agent (NE), comprenant
des moyens du premier gestionnaire (NMC) pour la communication avec l'agent (NE) utilisant un premier modèle d'objet (MODEL1) pour la modélisation de ressources du réseau de télécommunications,
des moyens du second gestionnaire (EM) pour la communication avec l'agent (ME) utilisant un second modèle d'objet (MODEL2) pour la modélisation de ressources du réseau de télécommunications,
des moyens (MEANS MODEL1) de l'agent (NE) pour la communication avec le premier gestionnaire (NMC) utilisant le premier modèle d'objet (MODEL1) et des moyens (MEANS MODEL2) de l'agent (NE) pour la communication avec le second gestionnaire (EM) utilisant le second modèle d'objet (MODEL2),
des moyens du second gestionnaire (EM) pour la réception lors d'une communication entre l'agent (NE) et le second gestionnaire (EM) de messages de l'agent (NE) utilisant le second modèle d'objet (MODEL2) et pour la transmission au premier gestionnaire (NMC) utilisant le premier modèle d'objet (MODEL1),
des moyens du premier gestionnaire (NMC) pour l'envoi d'une demande à l'agent (NE) pour l'achèvement d'une communication utilisant le premier modèle d'objet (MODEL1) entre le gestionnaire (NMC) et l'agent (NE) et pour démarrer une communication utilisant le second modèle d'objet (MODEL2) entre le second gestionnaire (EM) et l'agent (NE),
des moyens du second gestionnaire (EM) pour l'envoi d'une demande à l'agent (NE) pour l'achèvement d'une communication utilisant le second modèle d'objet (MODEL2) entre le second gestionnaire (EM) et l'agent (NE) et pour démarrer une communication utilisant le premier modèle d'objet (MODEL1) entre le premier gestionnaire (NMC) et l'agent (NE).
